# EUROPÄISCHE PATENTSCHRIFT

(11) **EP 0 626 796 B1**
(45) Veröffentlichungstag und Bekanntmachung des Hinweises auf die Patenterteilung: **13.01.1999**
(21) Anmeldenummer: 94106913.0
(22) Anmeldetag: 03.05.1994
(51) Int. Cl.: H04Q 7/22, H04Q 7/30, H04B 7/26

(54) **Verfahren zum Synchronisieren von Basisstationen in einem mehrzellularen, drahtlosen Fernsprechsystem**
Method for synchronizing base-stations in a multicellular cordless telephone system
Procédé pour synchroniser les stations de base dans un système radiotéléphonique multicellulaire

(30) Priorität: 28.05.1993 DE 4317895
(43) Veröffentlichungstag der Anmeldung: 30.11.1994
(73) Patentinhaber: SIEMENS AKTIENGESELLSCHAFT, 80333 München (DE)
(72) Erfinder: Heineck, Frank, Dipl.-Ing., D-81377 München (DE); Klug, Karl, Dipl.-Ing., D-83714 Miesbach (DE)

(56) Entgegenhaltungen:
- EP-A- 0 437 835
- DE-A- 3 011 935
- TELCOM REPORT, 8. Jahrgang, Heft 5, 1985 B. HILDEBRANDT "Die Basis- station im zellularen Funk- fernsprechnetz C450" Seiten 337-342

## Beschreibung

Die Erfindung betrifft ein Verfahren zum Synchronisieren von Basisstationen in einem mehrzellularen, drahtlosen Fernsprechsystem, bei dem die Basisstationen über Verbindungsleitungen mit einem Kommunikationssystem verbunden sind.

Ein derartiges mehrzellulares, drahtloses Fernsprechsystem ist in der Patentanmeldung P 43 09 848.7 vorgeschlagen und aus der Druckschrift telcom report 8 (1985),Heft 5, "Die Basisstation im zellularen Funkfernsprechnetz C450 " bekannt. Ein Kommunikationssystem, insbesondere eine Fernmelde-Nebenstellenanlage ist hierbei über Verbindungsleitungen, mit den Basisstationen verbunden, wobei über die Verbindungsleitungen digitalisierte, von bzw. zu den drahtlos an die Basisstationen (BS) angeschlossenen Kommunikationsendgeräte zu übermittelnde Sprach- und Signalisierungsinformationen übertragen werden. Bei durch Verbindungsleitungen an ein Kommunikationssystem angeschlossene Basisstationen ist eine Übermittlung die Synchronisierinformationen über die Verbindungsleitungen möglich. Bei der Übermittlung treten aufgrund unterschiedlicher Verbindungsleitungs-Laufzeiten und unterschiedlicher Verarbeitungsgeschwindigkeiten der schaltungstechnisch realisierten Synchronisiereinrichtungen Phasenabweichungen bei den Verarbeitungstaktsignalen und folglich bei den drahtlosen bzw. Funksignalen auf, die insbesondere in den Funkbereichen der benachbarten Basisstationen Störungen verursachen.

In einer weiteren Druckschrift telcom report 9 (1986), Sonderheft Nachrichtenübertragung auf Funkwegen, S. 286 bis 288, "Netzsynchronität im Mobilfunksystem C450" ist ein Verfahren zum drahtlosen Synchronisieren von Basisstationen für das Funksprechnetz C450 beschrieben. Bei diesem Verfahren sind um eine Initial-Basisstation herum in konzentrischen Ringen alle anderen Basisstationen angeordnet. Die Initial-Basisstation synchronisiert drahtlos die Basisstationen des ersten Ringes, die Basisstationen des ersten Ringes synchronisieren die Basisstationen des zweiten Ringes usw. Durch unterschiedliche Laufzeiten bzw. Phasenabweichungen, insbesondere in benachbarten Basisstationen eines Ringes, die einer gemeinsamen Bezugs-Basisstation zugeordnet sind, sind ebenfalls Störungen der benachbarten Funkbereiche möglich.

In der DE 30 11 935 Al ist ein mobiles Funknetz mit netzweiter Synchronisation beschrieben, bei dem ausgehend von einer zentralen Zone das Funknetz sukzessive synchronisiert wird, wobei jede der Basisstationen eine Synchronisierinformation an die hierarchisch niedrigeren Basisstationen übermittelt. Die hierarchisch niedrigere Basisstation synchronisiert sich selbständig auf die empfangene Synchronisierinformation. Eine derartige Netzsynchronisation ist insbesondere für ein Mobilfunknetz vorgesehen.

Die der Erfindung zugrunde liegende Aufgabe besteht darin, die durch die Phasenabweichungen verursachten Störungen in den Funkbereichen der benachbarten Basisstationen zu vermeiden. Die Aufgabe wird ausgehend von einem drahtlosen, mehrzellularen Fernsprechsystem gemäß Oberbegriff des Patentanspruchs 1 durch dessen kennzeichnende Merkmale gelöst.

Der wesentliche Aspekt des erfindungsgemäßen Verfahrens ist darin zu sehen, daß die das Synchronisieren der Basisstationen bewirkenden Synchronisierinformationen drahtlos von jeweils einer Basisstation ausgesandt werden und eine der benachbarte Basisstation sich auf die empfangene Synchronisierinformation synchronisiert, wobei diese dadurch bewirkte Master-Slave-Beziehung zweier benachbarter Basisstationen bezüglich der Synchronisierung für Nachsynchronisierungen während des Betriebes festgelegt ist. Der Synchronisierablauf, d.h. welche Basisstation eine Synchronisierinformation aussendet und welche Basisstation sich auf diese Synchronisierinformation synchronisiert, wird durch das Kommunikationssystem, insbesondere eine Fernmeldenebenstellenanlage, über die Verbindungsleitungen gesteuert. Die wesentlichen Vorteile des erfindungsgemäßen Verfahrens sind darin zu sehen, daß zum einen die Störungen in den Funkbereichen benachbarter Basisstationen aufgrund unterschiedlicher Phasenlagen der Funksignale vermieden werden und zum anderen mit dem erfindungsgemäßen Verfahren ein Synchronisieren von benachbarten Basisstationen ermöglicht wird, die an unterschiedliche Kommunikationssysteme über Verbindungseitungen angeschlossen sind - Anspruch 9. Ein weiterer wesentlicher Vorteil des erfindungsgemäßen Verfahrens ist darin zu sehen, daß hinsichtlich der Synchronisierabweichungen von benachbarten Basisstationen insbesondere bei benachbarten Basisstationen, die an unterschiedliche Kommunikationssysteme angeschlossen sind, die Anforderungen des internationalen DECT-Standards (Digital European Cordless Telecommunication) realisierbar sind.

Ein weiterer wesentlicher Aspekt des erfindungsgemäßen Verfahrens ist darin zu sehen, das die Basisstationen in einem Abstand voneinander anzuordnen sind, bei dem die von der Nachbarstation ausgesandten Synchronisierinformationen zumindest teilweise empfangbar sind. Als wesentliches Kriterium für die Bestimmmung des Abstands zwischen zwei benachbarten Basisstationen ist die Höhe des Pegels der empfangenen, von der Nachbar-Basisstation ausgesandten Synchronisierinformation vorgesehen - Anspruch 2. Durch die Höhe des Pegels der drahtlos empfangenen Synchronisierinformationen wird im wesentlichen die Synchronisierreichweite bestimmt. Überschreitet der Pegel der empfangenen Synchronisiersignale bzw. Synchronisierinformation einen vorgegebenen Wert, so ist die Synchronisierinformation zumindest zeitweise empfangbar. Dies bedeutet, daß die Synchronisierinformation nicht ständig empfangen werden muß, um zwei benachbarte Basisstationen zu synchronisieren. Dies bedeutet des weiteren, daß die Synchronisierreichweite erheblich über einer Sprachreichweite zwischen zwei Basisstationen liegt. Die Sprachreichweite, d.h. die Übertragungsreichweite der drahtlosen Fernsprechsignale zwischen der Basisstation und den drahtlosen Kommunikationsendgeräten, oder einer benachbarten Basisstation, wird durch die aufwendige Messung einer Bitfehlerrate bestimmt, d.h. bei Überschreiten einer vorgegebenen Bitfehlerrate ist die Grenze der Sprachreichweite erreicht. Ein auf eine Sprachreichweite zu den angeschlossenen Kommunikationsendgeräten abgestimmter Abstand zwischen zwei Basisstationen bleibt unter der doppelten Sprachreichweite, da eine Überlappung der Sprachreichweitenbereiche erforderlich ist, um insbesondere bei mehrzellularen, drahtlosen Fernsprechsystemen flächendeckende Funkgebiete zu bilden. Da die Synchronisierreichweite erheblich über der Sprachreichweite der benachbarten Basisstationen liegt, kann bei Einsatz des erfindungsgemäßen Verfahrens der auf die Sprachreichweite abgestimmte Abstand zwischen den Basisstationen unter Berücksichtigung des funktechnischen Szenarios annähernd beibehalten werden, d.h. ist nicht wesentlich zu verringern, zumal der Nachrichtenfluß zwischen den Basisstationen über Verbindungsleitungen an das Kommunikationssystem durchgeführt wird.

Gemäß einer vorteilhaften Ausgestaltung des erfindungsgemäßen Verfahrens wird bei der Pegelmessung der Pegel der drahtlos empfangenen Synchronisierinformationen mit einem vorgegebenen Synchronisierpegel verglichen und eine Empfangbarkeitsinformation gebildet, sofern der Pegel der drahtlos empfangenen Synchronisierinformationen den Synchronisierpegel übersteigt - Anspruch 3. Durch diese Empfangbarkeitsinformation wird eine der die Synchronisierinformationen aussendenden Basisstation nächstliegende Basisstation insbesondere bei einer Inbetriebnahme des drahtlosen Fernsprechsystems bestimmt. Da wie vorhergehend erläutert, durch die Bestimmung der Synchronisierreichweite die Sprachreichweite zu den angeschlossenen Kommunikationsendgeräten zwischen zwei benachbarten Basisstationen gewährleistet ist, ist durch eine gegenüber einer zeitaufwendigen Bitfehlerratenmessung sehr einfache Pegelmessung der Synchronisierabstand bestimmt und die Sprachreichweitenüberlappung gewährleistet. Dieser wesentlicher Vorteil des erfindungsgemäßen Kommunikationssystem wirkt sich insbesondere bei der Installation bzw. Inbetriebnahme eines mehrzellularen, drahtlosen Fernsprechsystems durch erhebliche Zeiteinsparungen aus.

Bei einem erstmaligen Synchronisieren von mehreren an ein Kommunikationssystem angeschlossenen Basisstationen werden zunächst alle Basisstationen in einen Empfangszustand gesteuert - Anspruch 4. Eine in einer Basisstation gespeicherten Synchronisierinformation wird drahtlos ausgesandt - beispielsweise mit der Port Nr. 1, wird eine in dieser gespeicherte Synchronisierinformation schnurlos, d.h. über Funkmittel, ausgesandt. Nach einem Empfang der drahtlos ausgesandten Synchronisierinformation mit ausreichendem Pegel in einer der benachbarten Basisstationen wird in dieser eine Empfangbarkeitsinformation gebildet und über Verbindungsleitungen an das Kommunikationssystem übermittelt. Nach Empfang einer Empfangbarkeitsinformation im Kommunikationssystem wird durch Übermitteln einer Steuerinformation über die Verbindungsleitungen die betreffende Basisstation veranlaßt, sich auf die drahtlos empfangene Synchronisierinformation zu synchronisieren und eine in dieser Basisstation gespeicherte Synchronisierinformation auszusenden. Hierbei wird davon ausgegangen, daß lediglich die benachbarte Basisstation eine Synchronisierbarkeitsinformation an das Kommunikationssystem übermitteln kann. Der Empfang von Empfangbarkeitsinformationen von weiteren Basisstationen sowie das Synchronisieren auf die jeweils drahtlos empfangenden Synchronisierinformationen und das drahtlos Aussenden von Synchronisierinformationen wird solange wiederholt, bis alle Basisstationen auf die jeweilige Nachbarstation synchronisiert sind.

Bei einem Empfang von mehr als zwei Empfangbarkeitsinformationen im Kommunikationssystem, d.h. es werden in mehr als einer Basisstation die von einer anderen Basisstation ausgesandten Synchronisierinformationen empfangen, werden durch das Kommunikationssystem jeweils mit Hilfe einer über Verbindungsleitungen übermittelten Pegelmeß- sowie einer Pegelergebnisinformation die betreffenden Basisstationen hinsichtlich der Höhe des Empfangspegels der schnurlos empfangenen Synchronisierinformationen abgefragt - Anspruch 5. Im Kommunikationssystem werden die empfangenen Informationen hinsichtlich der Höhe des Empfangspegels ausgewertet und es wird diejenige Basisstation durch terrestrisches Übermitteln einer Steuerinformation veranlaßt, sich auf die drahtlos empfangene Synchronisierinformation zu synchronisieren, die den höchsten Pegel der drahtlos empfangenen Synchronisierinformation gemeldet hat. Durch diese Maßnahme wird auch in umfangreichen drahtlosen mehrzellularen Fernsprechsystemen jeweils eine Master-Slave-Zuordnung zweier Basisstationen ermöglicht.

Bei größeren mehrzellularen, drahtlosen Fernsprechsystemen verursacht die Pegelabfrage gemäß Anspruch 5 einen erheblichen Steueraufwand in Kommunikationssystemen. Dieser Steueraufwand wird dadurch verringert, daß nach Empfang der drahtlos ausgesandten Synchronisierinformationen mit ausreichendem Pegel in zumindest einer der benachbarten Basisstationen in diesen der Empfangspegel gemessen sowie eine Empfangbarkeits- und eine Pegelergebnisinformation gebildet und zusammen terrestrisch an das Kommunikationssystem übermittelt werden - Anspruch 6. Die Auswertung und das Synchronisieren der Basisstationen erfolgt gemäß der vorteilhaften Weiterbildung nach Anspruch 5.

Für eine Nachsynchronisierung der Basisstationen während des Betriebes bleibt die bei der Erstsynchronisierung festgelegte Reihenfolge unter Berücksichtigung der Master-Slave-Beziehungen der benachbarten Basisstationen erhalten - Anspruch 7. Ein Nachsynchronisieren der Basisstationen kann temporär, d.h. in unregelmäßigen größeren Zeitabständen, regelmäßig in kleineren oder größeren Zeitabständen oder ständig durchgeführt werden - Anspruch 8. Üblicherweise wird ein Nachsynchronisieren in unregelmäßigen Zeitabständen, vorzugsweise bei dynamisch gering belasteter Steuereinrichtung des Kommunikationssystems, durchgeführt.

Gemäß einer weiteren vorteilhaften Ausgestaltung des erfindungsgemäßen Verfahrens werden die drahtlos zu übermittelnden Informationen gemäß dem DECT-Standard gebildet - Anspruch 10. In diesem DECT-Standard sind die Anforderungen hinsichtlich zulässiger Phasenabweichungen von Verarbeitungstakten benachbarter Basisstationen definiert.

Vorteilhaft wird das Kommunikationssystem, sowie die Basisstationen gemäß dem in der deutschen Patentanmeldung P 43 09 848.7 vorgeschlagenen mehrzellularen, drahtlosen Fernsprechsystem realisiert - Anspruch 11. Bei einer derartigen Realisierung ist aufgrund einer erheblichen Integration der einzelnen Komponenten in integrierte Schaltkreise eine besonders wirtschaftliche, programmtechnische und schaltungstechnische Realisierung von mehrzellularen, drahtlosen Fernsprechsystemen möglich.

Im folgenden wird das erfindungsgemäße Verfahren anhand zweier zeichnerischen Darstellungen erläutert. Dabei zeigen
- Fig. 1: in einem Blockschaltbild ein drahtloses, mehrzellulares Fernsprechsystem und
- Fig. 2: in einem Ablaufdiagramm die Verfahrensschritte bei einer erstmaligen Synchronisation der Basisstationen gemäß Fig. 1.

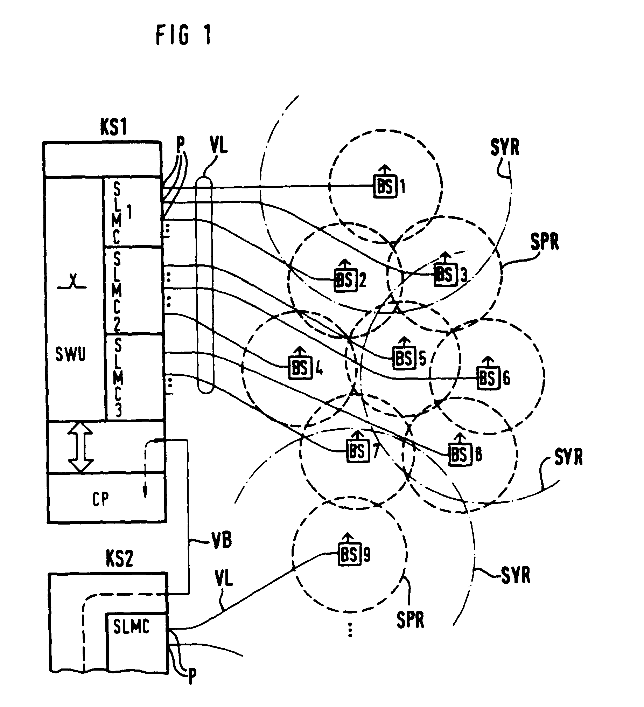

Fig. 1 zeigt ein drahtloses, mehrzellulares Fernsprechsystem, das durch ein erstes und durch ein teilweise dargestelltes zweites Kommunikationssystem KS 1, KS 2 gebildet ist. An das erste Kommunikationssystem KS 1 sind jeweils über eine Verbindungsleitung VL acht Basisstationen BS 1..8 angeschlossen. Für den Anschluß der Basisstationen BS 1..8 sind im ersten Kommunikationssystem KS 1 drei Basisstationsanschlußmodule SLMC 1..3 vorgesehen. Jedes der Basisstationsanschlußmodule SLMC 1..3 ist für den Anschluß jeweils einer Verbindungsleitung VL mit bis zu acht Übertragungsschnittstellen P ausgestattet - durch Punkte angedeutet. Für das Ausführungsbeispiel sei beispielhaft angenommen, daß im ersten und zweiten Basisstationsanschlußmodul SLMC 1,2 jeweils drei Übertragungsschnittstellen P mit jeweils einer Verbindungsleitung VL und das dritte Basisstationsanschlußmodul SLM 3 mit zwei Verbindungsleitungen VL beschaltet ist. Die von bzw. zu den an die Basisstationen BS 1..8 drahtlos angeschlossenen, nicht dargestellten Kommunikationsendgeräte zu übermittelnden digitalisierte Sprach- und Signalisierunsgssignale werden über die Übertragungsschnittstellen P beispielsweise nach dem Zeitgetrenntlagestrich Übertragungsverfahren übermittelt. Für die vermittlungstechnische Steuerung der von den Basisstationen BS 1..8 übermittelten oder zu übermittelnden Nachrichten- und Signalisierungsinformationen ist im ersten Kommunikationssystem KS 1 eine Koppelfeldeinrichtung SWU sowie eine Steuereinrichtung CP vorgesehen. Die Basisstationen BS 1..8 und das erste und zweite Kommunikationssystem KS 1, KS 2 sind beispielsweise gemäß dem in der deutschen Patentanmeldung P 43 09 848.7 vorgeschlagenen mehrzellularen, drahtlosen Fernsprechsystem realisiert.

Durch die strichlierten Kreise jeweils um eine Basisstation BS 1..8 ist eine Sprachreichweite SPR dargestellt. Die Sprachreichweite SPR gibt die Grenze an, innerhalb der ein drahtloses Kommunikationsendgerät - nicht dargestellt - drahtlos mit der im Zentrum befindlichen Basisstation BS 1..8 kommunizieren kann. Wie bereits erläutert, wird die Sprachreichweite SPR durch eine Bitratenmessung ermittelt, wobei die Bitfehlerrate der digitalisierten Sprach- und Signalisierungsinformationen bei der drahtlosen Übermittlung gemessen wird. Bekannterweise müßte eine benachbarte Basisstation BS 1..8 nun jeweils innerhalb der Sprachbandweite SPR liegen, um Informationen zu übermitteln. Beim erfindungsgemäßen Verfahren wird hingegen davon ausgegangen, daß für die Ermittlung einer Synchronisierinformation für die Bemessung des Abstandes zwischen den Basisstationen BS 1..8 nicht die Bitfehlerrate der übermittelten Funksignale sondern der Empfangspegel herangezogen wird. Hierbei wird zugelassen, daß aufgrund schwankender Empfangsverhältnisse - beispielsweise Tag und Nacht - die Synchronisierinformationen nur zeitweise empfangbar sind. Trotz dieser zeitweisen Empfangbarkeit ist eine Synchronisierung der Basisstationen BS 1..8 untereinander möglich, da eine ständige Synchronisierung nicht erforderlich ist und eine Übermittlung von Synchronisierinformationen lediglich in bestimmten Mindestzeitabständen vorzusehen ist. Die sich aus diesen Überlegungen ergebende Synchronisierweite SYR ist in der Fig. 1 durch um die erste und die sechste Basisstation BS 1, 6 dargestellte strichpunktierte Linien angegeben. Die Basisstationen BS 1..8 sind derart angeordnet, daß zumindest eine der benachbarten Basisstationen BS 1..8 innerhalb des Bereichs der Synchronisierreichweite SYR liegt. Durch die erhebliche Erhöhung der Synchronisierreichweite SYR über die Sprachreichweite SPR hinaus, ist annähernd ein mehrzellulares, drahtloses Fernsprechsystem konfigurierbar, das unter Berücksichtigung der Funkübertragungsverhältnisse unwesentlich von einer auf einer Sprachreichweite SPR basierenden Netzkonzeption abweicht.

Das teilweise dargestellte, zweite Kommunikationssystem KS 2 weist ein beispielhaft dargestelltes Basisstationsanschlußmodul SLMC auf, an dessen Übertragungsschnittstelle P über eine Verbindungsleitung VL eine neunte Basisstation BS 9 angeschlossen ist. Wie bei den Basisstationen BS 1..8 des ersten Kommunikationssystems KS 1 überschneidet sich dessen Sprachreichweite SPR mit zumindest einer Sprachreichweite SPR einer benachbarten Basisstation BS 1..8 - im Ausführungsbeispiel die Sprachreichweite SPR der siebten Basisstation BS 7. Analog hierzu liegt mindestens eine benachbarte Basisstation BS 1.. BS 8 - im Ausführungsbeispiel die siebte Basisstation BS 7 - innerhalb der Synchronisierreichweite SYR der neunten Basisstation BS 9. Die beiden Kommunikationssysteme KS 1, 2 sind über eine Verbindung VB im Sinne eines Kommunikationsaustauschen verbunden. Üblicherweise ist eine derartige Verbindung VB durch eine bekannte "Trunk"-Verbindung realisiert.

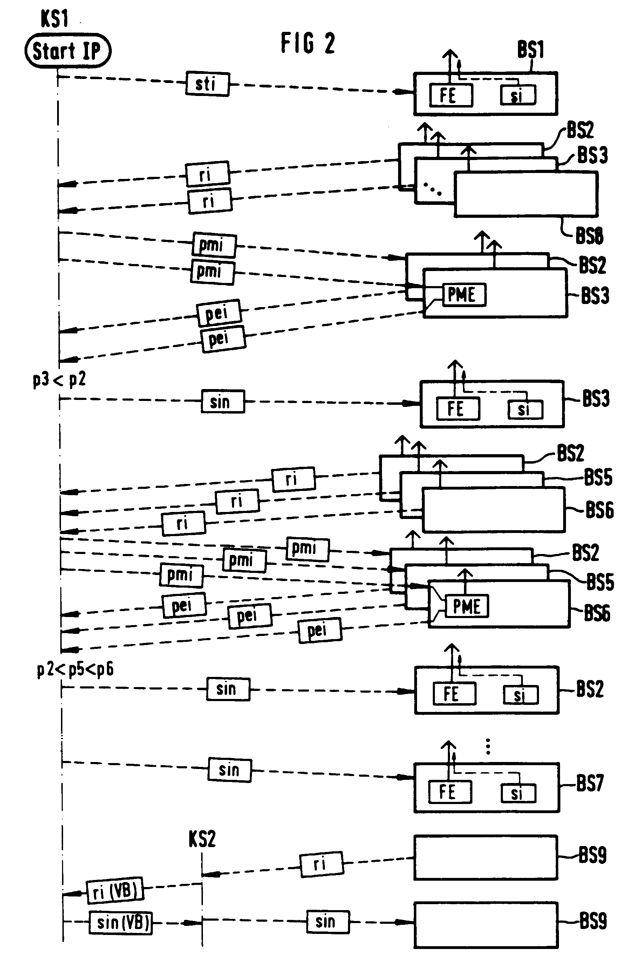

Fig. 2 zeigt anhand eines Ablaufdiagrammes das Synchronisieren der an die beiden Kommunikationssysteme KS 1, KS 2 angeschlossenen Basisstationen BS 1..9. Die Kommunikationssysteme KS 1, KS 2 sind im linken Bereich der Fig. 2 durch strichpunktierte Linien dargestellt. Der Meldungsfluß zwischen den Kommunikationssystemen KS 1, KS 2 und den im rechten Bereich der Fig. 2 dargestellten Basisstationen BS 1..9 ist durch strichlierte Linien angegeben, wobei zu übermittelnden Informationen in den Meldungsfluß eingefügt sind.

Für das Ausführungsbeispiel sei angenommen, daß das Synchronisieren erstmalig nach einer Installation der Kommunikationssysteme KS 1, KS 2 und der Basisstationen BS 1..9 initialisiert wird. Nach dem Start der Initialisierungsprozedur IP im ersten Kommunikationssystem KS 1 wird eine Startinformation sti gebildet und an die erste Basisstation BS 1 übermittelt. Prinzipiell kann mit jeder der Basisstationen BS 1..9 das Synchronisieren initialisiert werden.

Nach dem Empfang der Startinformation sti in der ersten Basisstation BS 1 werden in dieser mit Hilfe einer Funkeinrichtung FE Synchronisierinformationen si drahtlos ausgesandt. Die in der ersten Basisstation gespeicherten Synchronisierinformationen si werden beispielsweise in einer die Verarbeitungsgeschwindigkeit bestimmenden, nicht dargestellten Takteinrichtung in bekannter Weise gebildet.

Gemäß der Konfiguration der Basisstationen BS 1..8 in Fig. 1 liegen die zweite und dritte Basisstation BS 2, 3 innerhalb der Synchronisierreichweite SYR der ersten Basisstation BS 1. Folglich werden die Synchronisierinformationen si in der zweiten und dritten Basisstation BS 2, 3 mit ausreichendem Pegel empfangen, wodurch in diesen Basisstationen BS 2, 3 eine Empfangbarkeitsinformation ri gebildet und terrestrisch an das erste Kommunikationssystem KS 1 übermittelt wird.

Da zwei Basisstationen BS 2, 3 auf die von der ersten Basisstation BS 1 ausgesandten Synchronisierinformationen si synchronisierbar sind, wird eine der beiden Stationen BS 2, 3 durch eine Pegelmessung der empfangenen Synchronisierinformationen si ausgewählt. Hierbei werden Pegelmeßinformationen pmi an die zweite und dritte Basisstation BS 2, 3 übermittelt, in diesen mit Hilfe einer Pegelmeßeinrichtung PME der Pegel der empfangenen Synchronisierinformationen si gemessen und anschließend die Meßergebnisse mit Hilfe einer Pegelergebnisinformation pei an das erste Kommunikationssystem KS 1 übermittelt. Die Prozedur kann entfallen, wenn der Pegel der empfangenen Synchronisierinformationen beim erstmaligen Empfang gemessen und die Pegelergebnisinformation pei bereits zusammen mit der Empfangbarkeitsinformation ri an das Kommunikationssystem übermittelt werden. Für das Ausführungsbeispiel sei angenommen, daß in der dritten Basisstation BS 3 ein höherer Pegel als in der zweiten Basisstation BS 2 gemessen wurde. Folglich wird an die dritte Basisstation BS 3 eine Steuerinformation sin übermittelt, wodurch in der dritten Basisstation BS 3 ein Synchronisieren auf die empfangenen Synchronisierinformationen si eingeleitet wird. Durch die Synchronisation wird eine phasenstarre Synchronisation der ausgesandten Zeitschlitze zueinander bewirkt, wobei Beginn und Ende eines Zeit schlitzes unter den Basisstationen kohärent sind. Gleichzeitig wird in dieser dritten Basisstation BS 3 ein Aussenden von analog zur ersten Basisstation BS 1 aufgebauten Synchronisierinformationen si bewirkt.

Da diese Synchronisierinformation si gemäß Fig. 1 in der zweiten, fünften und sechsten Basisstation BS 2, 5, 6 empfangbar ist und innerhalb der Synchronisierreichweite SYR der dritten Basisstation BS 3 liegen, wird in diesen Basisstationen BS 2, 5, 6 jeweils eine Empfangbarkeitsinformation ri gebildet und an das erste Kommunikationssystem übermittelt. Da drei Empfangbarkeitsinformationen ri vorliegen, wird durch übermitteln jeweils einer Phasenmeßinformation pmi an die zweite, fünfte und sechste Basisstation BS 2, 5, 6 in diesen mit Hilfe einer Pegelmeßeinrichtung PME jeweils der Pegel der empfangenen Synchronisierinformationen si gemessen und das Meßergebnis mit Hilfe von Pegelergebnisinformationen pei an das erste Kommunikationssystem KS 1 übertragen. Für das Ausführungsbeispiel sei angenommen, daß in der zweiten Basisstation BS 2 der höchste Pegel gemessen wurde und an diese eine Steuerinformation sin übermittelt wird. Hierdurch wird ein Synchronisieren der zweiten Basisstation BS 2 auf die Synchronisierinformationen si, die von der dritten Basisstation BS 2 drahtlos ausgesandt wurden, initialsiert. Gleichzeitig wird das Aussenden von in der zweiten Basisstation BS 2 gebildeten Synchronisierinformationen si bewirkt.

Die sich wiederholenden Vorgänge für die Synchronisation der vierten bis achten Basisstation sind in Fig. 2 durch punktierte Linien dargestellt. Im weiteren ist in Fig. 2 eine kommunikationssystemübergreifende Synchronisation von Basisstationen BS 1..9 dargestellt. Hierbei wird davon ausgegangen, daß vom ersten Kommunikationssystem KS 1 eine Steuerinformation sin an die siebte Basisstation BS 7 übermittelt und dort ein Synchronisieren auf die vorhergehend übermittelte Synchronisierinformation si bewirkt wird. Gleichzeitig werden in der siebten Basisstation BS 7 gebildete Synchronisierinformationen si drahtlos mit Hilfe der Funkeinrichtung FE ausgesandt. Diese Synchronisierinformationen si werden in der neunten Basisstation BS 9 mit ausreichendem Pegel empfangen, wodurch in dieser eine Empfangbarkeitsinformation ri gebildet und an das zweite Kommunikationssystem KS 2 übermittelt wird. Die Empfangbarkeitsinformation ri wird vom zweiten Kommunikationssystem über die Verbindung VB an das erste Kommunikationssystem KS 1 geleitet. Da nur eine Empfangbarkeitsinformation ri für die in der siebten Basisstation BS 7 ausgesandten Synchronisierinformation si vorliegt, wird eine Steuerinformation sin gebildet und über das zweite Kommunikationssystem KS 2 an die neunte Basisstation BS 9 übermittelt. In dieser wird ein Synchronisieren auf die empfangenen Synchronisierinformationen si der siebten Basisstation BS 7 bewirkt.

Nach dem vorhergehend erläuterten Erstsynchronisieren der Basisstationen BS 1..9 ist ein Nachsynchronisieren während des Betriebes nunmehr in größeren Zeitabständen möglich, da die Basisstationen BS 1..9 darüber hinaus über einen gemeinsamen Kommunikationssystem-Übertragungstakt versorgt werden. Insbesondere wird ein Nachsynchronisieren der Basisstationen BS 1..9 untereinander in Betriebsphasen durchgeführt, bei denen die Steuereinrichtungen CP der Kommunikationssysteme KS 1, KS 2 nicht ausgelastet sind. Das Nachsynchronisieren wird in der bei dem Erst synchronisieren festgelegten Reihenfolge unter Berücksichtigung der Master-Slave-Beziehungen der Basisstationen BS 1..9 untereinander durchgeführt. Da drahtlose Fernsprechsysteme zukünftig nach dem DECT-Standard realisiert werden, wird eine Synchronisierung der Basisstationen BS 1..9 dadurch bewirkt, daß sich eine Slave-Basisstation auf eine drahtlos ausgesandte Zeitschlitzstruktur der Master-Basisstation BS 1..9 synchronisiert. Die Informationen hinsichtlich dieser Zeitschlitzstuktur sind in den Basisstationen BS 1..9 gespeichert und werden mit Hilfe einer Basisstations-Steuereinrichtung - nicht dargestellt - gelesen und an eine Funkeinrichtung FE übermittelt, in der diese Informationen in entsprechende, DECT-gemäße Funksignale umgewandelt werden.

## Patentansprüche

1. Verfahren zum Synchronisieren von Basisstationen (BS) in einem mehrzellularen, drahtlosen Fernsprechsystem, bei dem die Basisstationen (BS) über Verbindungsleitungen (VL) mit einem Kommunikationssystem (KS) verbunden sind,
**dadurch gekennzeichnet**,
- daß Synchronisierinformationen (si) von den Basisstationen (BS) drahtlos ausgesandt werden,
- daß die Basisstationen (BS) derart in einem Abstand voneinander angeordnet sind, daß drahtlos empfangene Synchronisierinformationen (si) zumindest von einer benachbarten Basisstation (BS) zumindest teilweise empfangbar ist,
- und daß die erstmalige drahtlose Synchronisation aller Basisstationen BS im mehrzellularen, drahtlosen Fernsprechsystem und die drahtlose Synchronisation während des Betriebes durch das Kommunikationssystem (KS) über die Verbindungsleitungen (VL) gesteuert wird, wobei jeweils eine Basisstation (BS) auf die von einer Nachbar-Basisstation (BS) ausgesandten und empfangene Synchronisierinformation (si) synchronisiert wird.

2. Verfahren nach Anspruch 1,
**dadurch gekennzeichnet,**
daß die Empfangbarkeit der drahtlos empfangenen Synchronisierinformation (si) durch eine Pegelmessung bestimmt wird.

3. Verfahren nach Anspruch 2,
**dadurch gekennzeichnet,**
daß bei der Pegelmessung der Pegel der drahtlos empfangenen Synchronisierinformation (si) mit einem vorgegebenen Synchronisierpegel verglichen und eine Empfangbarkeitsinformation (ri) gebildet wird, sofern der Pegel der drahtlos empfangenen Synchronisierinformation (si) den Synchronisierpegel übersteigt.

4. Verfahren nach einem der vorhergehenden Ansprüche,
**dadurch gekennzeichnet,**
daß bei einem erstmaligen, durch das Kommunikationssystem (KS) gesteuerten Synchronisieren
- alle Basisstationen (BS) in einen Empfangszustand gesteuert werden,
- durch eine vom Kommunikationssystem (KS) übermittelte Startinformation (sti) eine in einer der Basisstationen (BS) gespeicherte Synchronisierinformation (si) drahtlos ausgesandt wird,
- nach einem Empfang der drahtlos ausgesandten Synchronisierinformation (si) mit ausreichendem Pegel in einer der benachbarten Basisstationen (BS) wird in dieser eine Empfangbarkeitsinformation (ri) gebildet und über Verbindungsleitungen (VL) an das Kommunikationssystem übermittelt,
- nach Empfang einer Empfangbarkeitsinformation (ri) im Kommunikationssystem (KS) wird durch Übermitteln einer Steuerinformation (sin) über die Verbindungsleitungen (VL) die betreffende Basisstation (BS) veranlaßt, sich auf die drahtlos empfangene Synchronisierinformation (si) zu synchronisieren und eine in dieser Basisstation gespeicherte Synchronisierinformation (si) auszusenden,
- und nach einem Empfang von Empfangbarkeitsinformationen (ri) von weiteren Basisstationen (BS) sowie das Synchronisieren auf die jeweils drahtlos empfangenen Synchronisierinformationen (si) und das drahtlose Aussenden von Synchronisierinformationen (si) wird solange wiederholt, bis alle Basisstationen (BS) auf die jeweilige Nachbar-Basisstation (BS) synchronisiert sind.

5. Verfahren nach Anspruch 4,
**dadurch gekennzeichnet,**
daß bei einem Empfang zumindest zweier Empfangbarkeitsinformationen (ri) von zumindest zwei Basisstationen (BS) im Kommunikationssystem (KS) jeweils mit Hilfe von über Verbindungsleitungen (VL) übermittelten Pegelmeßinformation (pmi) sowie Pegelergebnisinformation (pei) die betreffenden Basisstationen (BS) hinsichtlich der Höhe des Empfangspegels der drahtlos übermittelten Synchronisierinformation (si) abgefragt werden und daß durch das Kommunikationssystem (KS) diejenige Basisstation (BS), die den höchsten Empfangspegel der drahtlos empfangenen Synchronisierinformationen (si) gemeldet hat, durch Übermitteln einer Steuerinformation (sin) über die Verbindungsleitungen (VL) veranlaßt wird, sich auf die drahtlos empfangenen Synchronisierinformationen (si) zu synchronisieren.

6. Verfahren nach Anspruch 4,
**dadurch gekennzeichnet,**
daß bei einem Empfang der drahtlos ausgesandten Synchronisierinformation (si) mit ausreichendem Pegel in zumindest einer der benachbarten Basisstationen (BS) in diesen der Empfangspegel gemessen sowie eine Empfangbarkeits- und eine Pegelergebnisinformation (pei, ri) gebildet und zusammen terrestrisch an das Kommunikationssystem (KS) übermittelt werden, und daß durch das Kommunikationssystem (KS) diejenige Basisstation (BS), die den höchsten Empfangspegel der drahtlos empfangenen Synchronisierinformationen (si) gemeldet hat, durch terrestrisches Übermitteln einer Steuerinformation (sin) veranlaßt wird, sich auf die drahtlos empfangene Synchronisierinformation (si) zu synchronisieren.

7. Verfahren nach einem der vorhergehenden Ansprüche,
**dadurch gekennzeichnet,**
daß ein Nachsynchronisieren der Basisstation (BS) während des Betriebes in der beim Erstsynchronisieren festgelegten Reihenfolge unter Berücksichtigung der bestehenden Master-Slave-Beziehungen der benachbarten Basisstationen (BS) durchgeführt wird.

8. Verfahren nach Anspruch 7,
**dadurch gekennzeichnet,**
daß ein Nachsynchronisieren der Basisstation temporär, regelmäßig oder ständig durchführbar ist.

9. Verfahren nach einem der vorhergehenden Ansprüche,
**dadurch gekennzeichnet,**
daß das drahtlose Synchronisieren von Basisstationen (BS) kommunikationssystemübergreifend durchführbar ist.

10. Verfahren nach einem der vorhergehenden Ansprüche,
**dadurch gekennzeichnet,**
daß die drahtlos zu übermittelnden Informationen gemäß dem DECT-Standard gebildet werden.

11. Verfahren nach einem der vorhergehenden Ansprüche,
**dadurch gekennzeichnet,**
daß eine Übertragungseinheit sowie Leitungsanschlußeinheiten in der Basisstation (BS) durch Nachrichtenvermittlungseinheiten realisiert sind, die mit mehreren untergeordneten, einzelne Übertragungskanäle repräsentierende Einheiten über jeweils eine Verbindungsleitung (VL) koppelbar sind und die eine Empfangseinheit aufweisen, die ihr zugeführte Signale bewertet und für eine weitere Verarbeitung aufbereitet, und mit einer der Empfangseinheit vorgeschalteten und mit der Verbindungsleitung (VL) gekoppelten Schalteinheit, die abhängig von einem Steuersignal eine der Verbindungsleitungen (VL) durchschaltet, und mit einer mit den Verbindungsleitungen (VL) gekoppelten Überwachungseinheit, die das Auftreten von Sendesignalen der untergeordneten Einheiten auf der jeweiligen Verbindungsleitung (VL) detektiert und entsprechende Steuersignale abgibt, und mit einer mit der Überwachungseinheit, der Schalteinheit und der Verbindungsleitung (VL) gekoppelten Auswahleinheit, die abhängig von den Steuersignalen der Überwachungseinheit nach vorgegebenen Kriterien eine der Verbindungsleitungen auswählt und entsprechende Einstellsignale für die Schalteinheit und die untergeordneten Einheiten erzeugt.

## Claims

1. Method for synchronizing base stations (BS) in a multicellular cordless telephone system in which the base stations (BS) are connected to a communication system (KS) via link lines (VL), characterized
- in that synchronizing information (si) is sent out cordlessly by the base stations (BS),
- in that the base stations (BS) are arranged at a distance from one another in such a manner that synchronizing information (si) received cordlessly can be received at least partially at least by an adjacent base station (BS),
- and in that the initial cordless synchronization of all base stations BS in the multicellular cordless telephone system and the cordless synchronization during the operation is controlled by the communication system (KS) via the link lines (VL), in each case one base station (BS) being synchronized to the synchronizing information (si) sent out and received by an adjacent base station (BS).

2. Method according to Claim 1, characterized in that the receivability of the synchronizing information (si) received cordlessly is determined by a level measurement.

3. Method according to Claim 2, characterized in that during the level measurement, the level of the synchronizing information (si) received cordlessly is compared with a predetermined synchronizing level and a receivability information item (ri) is formed if the level of the synchronizing information (si) received cordlessly exceeds the synchronizing level.

4. Method according to one of the preceding claims, characterized in that, during an initial synchronization controlled by the communication system (KS),
- all base stations (BS) are controlled to a receiving state,
- a synchronizing information (si) stored in one of the base stations (BS) is cordlessly sent out due to a starting information (sti) conveyed by the communication system (KS),
- after reception of the synchronizing information (si), sent out cordlessly, with adequate level in one of the adjacent base stations (BS), a receivability information item (ri) is formed in the latter and conveyed to the communication system via link lines (VL),
- after reception of a receivability information item (ri) in the communication system (KS), conveying of a control information item (si) via the link lines (VL) causes the relevant base station (BS) to synchronize to the synchronizing information (si) received cordlessly and to send out a synchronizing information item (si) stored in this base station,
- and, after reception of receivability information items (ri) from other base stations (BS) and synchronization to the synchronizing information items (si) received cordlessly in each case, the cordless sending out of synchronizing information (si) is repeated until all base stations (BS) are synchronized to the respective adjacent base station (BS).

5. Method according to Claim 4, characterized in that during reception of at least two receivability information items (ri) from at least two base stations (BS) in the communication system (KS), the relevant base stations (BS) are interrogated with respect to the amplitude of the received level of the synchronizing information (si) conveyed cordlessly, in each case with the aid of level measurement information (pmi) and level result information (pei) conveyed via link lines (VL), and that the base station (BS) which has reported the highest received level of the synchronizing information (si) received cordlessly is caused by the communication system (KS) to synchronize to the synchronizing information (si) received cordlessly, by the conveying of a control information item (sin) via the link lines (VL).

6. Method according to Claim 4, characterized in that during reception of the synchronizing information (si), sent out cordlessly, with adequate level in at least one of the adjacent base stations (BS), the received level is measured in these and a receivability information item and a level result information item (pei, ri) are formed and together are conveyed terrestrially to the communication system (KS), and that the base station (BS) which has reported the highest received level of the synchronizing information (si) received cordlessly is caused by the communication system (KS) to synchronize to the synchronizing information (si) received cordlessly, by the terrestrial conveying of a control information item (si).

7. Method according to one of the preceding claims, characterized in that resynchronization of the base station (BS) is carried out during the operation in the order established during the initial synchronization, taking into consideration the existing master-slave relations of the adjacent base stations (BS).

8. Method according to Claim 7, characterized in that resynchronization of the base station can be carried out temporarily, regularly or continuously.

9. Method according to one of the preceding claims, characterized in that the cordless synchronization of base stations (BS) can be carried out across the communication system.

10. Method according to one of the preceding claims, characterized in that the information to be conveyed cordlessly is formed in accordance with the DECT standard.

11. Method according to one of the preceding claims, characterized in that a transmission unit and line interface units in the base station (BS) are implemented by means of message switching units which can be coupled to a number of subordinate units representing individual transmission channels via in each case one link line (VL) and which exhibit a receiving unit which evaluates signals supplied to it and conditions them for further processing, and comprising a switching unit preceding the receiving unit and coupled to the link line (VL), which switches through one of the link lines (VL) in dependence on a control signal, and comprising a monitoring unit coupled to the link lines (VL) which detects the occurrence of transmit signals of the subordinate units on the respective link line (VL) and outputs corresponding control signals, and comprising a selection unit coupled to the monitoring unit, the switching unit and the link line (VL) which selects one of the link lines in accordance with predetermined criteria in dependence on the control signals of the monitoring unit and generates corresponding adjustment signals for the switching unit and the subordinate units.

## Revendications

1. Procédé de synchronisation de stations de base (BS) dans un système radiotéléphonique multicellulaire dans lequel les stations de base (BS) sont reliées par l'intermédiaire de lignes de jonction (VL) à un système de communication (KS),
caractérisé par le fait que
- des informations de synchronisation (*si*) sont émises par radio par les stations de base (BS),
- les stations de base (BS) sont agencées les unes par rapport aux autres à une distance telle que des informations de synchronisation (*si*) émises par radio peuvent être reçues au moins partiellement au moins par une station de base voisine (BS),
- la première synchronisation par radio de toutes les stations de base (BS) dans le système radiotéléphonique multicellulaire et la synchronisation par radio pendant le fonctionnement sont commandées par le système de communication (KS) par l'intermédiaire des lignes de jonction (VL), chaque station de base (BS) étant synchronisée sur l'information de synchronisation (*si*) émise par une station de base voisine (BS) et reçue.

2. Procédé selon la revendication 1,
caractérisé par le fait que
la possibilité de réception de l'information de synchronisation (*si*) reçue par radio est déterminée par une mesure de niveau.

3. Procédé selon la revendication 2,
caractérisé par le fait que,
lors de la mesure de niveau, on compare le niveau de l'information de synchronisation (*si*) reçue par radio à un niveau de synchronisation prescrit et on forme une information de possibilité de réception (*ri*) si le niveau de l'information de synchronisation (*si*) reçue par radio dépasse le niveau de synchronisation.

4. Procédé selon l'une des revendications précédentes,
caractérisé par le fait que,
lors d'une première synchronisation commandée par le système de communication (KS),
- on commande toutes les stations de base (BS) dans un état de réception,
- à la suite d'une information de début (*sti*) transmise par le système de communication (KS), on émet par radio une information de synchronisation (*si*) mémorisée dans l'une des stations de base (BS),
- après que l'information de synchronisation (*si*) émise par radio a été reçue avec un niveau suffisant dans une des stations de base voisines (BS), on forme dans celle-ci une information de possibilité de réception (*ri*) et on ia transmet au système de communication par l'intermédiaire de lignes de jonction (VL),
- après la réception d'une information de possibilité de réception (*ri*) dans le système de communication (KS), la transmission d'une information de commande (*sin*) par l'intermédiaire des lignes de jonction (VL) à la station de base (BS) considérée provoque la synchronisation de celle-ci sur l'information de synchronisation (*si*) reçue par radio et l'émission par celle-ci d'une information de synchronisation (*si*) mémorisée dans cette même station de base,
- et, après une réception d'informations de possibilité de réception (*ri*) provenant d'autres stations de base (BS), la synchronisation sur les informations de synchronisation (*si*) reçues chaque fois par radio et l'émission par radio d'informations de synchronisation (*si*) sont répétées jusqu'à ce que toutes les stations de base (BS) soient synchronisées sur la station de base voisine (BS) respective.

5. Procédé selon la revendication 4,
caractérisé par le fait que,
lors d'une réception d'au moins deux informations de possibilité de réception (*ri*) d'au moins deux stations de base (BS) dans le système de communication (KS), on examine chaque fois à l'aide d'une information de mesure de niveau (*pmi*) et d'une information de résultat de niveau *(pei)* transmises par l'intermédiaire de lignes de jonction (VL) les stations de bases considérées en ce qui concerne la hauteur du niveau de réception de l'information de synchronisation (*si*) reçue par radio par les stations de base (BS) considérées et, à partir du système de communication (KS), la transmission d'une information de commande (*sin*) par l'intermédiaire des lignes de jonction (VL) à la station de base (BS) qui a signalé le plus haut niveau de réception des informations de synchronisation (*si*) reçues par radio fait que celle-ci se synchronise sur les informations de synchronisation (si) reçues par radio.

6. Procédé selon la revendication 4,
caractérisé par le fait que,
lors d'une réception de l'information de synchronisation (*si*) émise par radio avec un niveau suffisant dans au moins l'une des stations de base voisines (BS), on mesure dans celle-ci le niveau de réception, on forme une information de possibilité de réception (*ri*) et une information de résultat de mesure *(pei)* et on les transmet conjointement par voie terrestre au système de communication (KS) et, à partir du système de communication (KS), la transmission terrestre information de commande (*sin*) à la station de base (BS) qui a signalé le plus haut niveau de réception des informations de synchronisation (*si*) reçues par radio fait que celle-ci se synchronise sur les informations de synchronisation (*si*) reçues par radio.

7. Procédé selon l'une des revendications précédentes,
caractérisé par le fait que
on effectue une synchronisation ultérieure de la station de base (BS) pendant le fonctionnement dans l'ordre fixé lors de la première synchronisation en tenant compte des relations maître-esclave entre les stations de base voisines (BS).

8. Procédé selon la revendication 7,
caractérisé par le fait que
on peut effectuer une synchronisation ultérieure de la station de base temporairement, régulièrement ou en permanence.

9. Procédé selon l'une des revendications précédentes,
caractérisé par le fait que
on peut effectuer la synchronisation par radio de stations de base (BS) au-delà du système de communication.

10. Procédé selon l'une des revendications précédentes,
caractérisé par le fait que
on forme les informations à transmettre par radio selon le standard DECT.

11. Procédé selon l'une des revendications précédentes,
caractérisé par le fait que
on met en oeuvre une unité de transmission et des unités de raccordement de lignes dans la station de base (BS) au moyen d'unités de commutation de messages qui peuvent être couplées, chaque fois par l'intermédiaire d'une ligne de jonction (VL), à plusieurs unités subordonnées représentant des canaux de transmission individuels et qui comportent une unité de réception exploitant des signaux qui lui sont envoyés et les préparant pour un traitement ultérieur, et comportant une unité d'interconnexion qui est branchée du côté amont de l'unité de réception, qui est connectée à la ligne de jonction (VL) et qui interconnecte une des lignes de jonction (VL) en fonction d'un signal de commande, et une unité de surveillance qui est couplée aux lignes de jonction (VL), qui détecte l'apparition de signaux d'émission des unités subordonnées sur la ligne de jonction (VL) respective et qui délivre des signaux de commande correspondants, et une unité de sélection qui est couplée à l'unité de surveillance, à l'unité d'interconnexion et à la ligne de jonction (VL), qui sélectionne une des lignes de jonction en fonction des signaux de commande de l'unité de surveillance selon des critères prescrits et qui produit des signaux de réglage correspondants pour l'unité d'interconnexion et pour les unités subordonnées.
